# FASCICULE DE BREVET EUROPEEN

(11) **EP 1 697 163 B1**
(45) Date de publication et mention de la délivrance du brevet: **10.10.2007**
(21) Numéro de dépôt: 04816506.2
(22) Date de dépôt: 06.12.2004
(51) Int. Cl.: B60N 2/46, B60N 3/10

(54) **CONSOLE A VOLUME INTERNE MODULABLE POUR VEHICULE AUTOMOBILE**
HALTERUNG MIT EINEM VARIABLEN INNENVOLUMEN FÜR EIN KRAFTFAHRZEUG
BRACKET WITH A VARIABLE INTERNAL VOLUME FOR A MOTOR VEHICLE

(30) Priorité: 19.12.2003 FR 0315046
(43) Date de publication de la demande: 06.09.2006
(73) Titulaire: RENAULT S.A.S., 92100 Boulogne Billancourt (FR)
(72) Inventeur: LEGRAND, Jean Pierre, F-28300 Bercheres Saint Germain (FR)
(86) Numéro de dépôt international: PCT/FR2004/050652
(87) Numéro de publication internationale: WO 2005/061271

(56) Documents cités:
- WO-A-01/81118
- US-A1- 2003 057 709
- PATENT ABSTRACTS OF JAPAN vol. 0062, no. 67 (M-182), 25 décembre 1982 (1982-12-25) & JP 57 158140 A (NISSAN JIDOSHA KK), 29 septembre 1982 (1982-09-29)
- PATENT ABSTRACTS OF JAPAN vol. 2003, no. 11, 5 novembre 2003 (2003-11-05) & JP 2003 182461 A (TOYOTA AUTO BODY CO LTD), 3 juillet 2003 (2003-07-03)

## Description

L'invention concerne une console à volume interne modulable pour véhicule automobile, notamment une console centrale disposée entre les sièges avant du véhicule.

Une telle console comportant les caractéristiques du préambule de la revendication 1 est connue du document JP-A-2003 3182 401.

L'invention a pour objet de proposer une console permettant le moduler les dimensions des compartiments de rangement tout en optimisant l'utilisation de l'espace intérieur de la console.

A cet effet, l'objet de l'invention concerne une console pour véhicule automobile selon la revendication 1.

En ouvrant le volet, il est ainsi possible d'utiliser le volume des deux compartiments et d'accéder au compartiment inférieur par l'ouverture supérieure de la console.

De préférence, l'ouverture dans la cloison s'étend sur sensiblement toute la surface du compartiment inférieur, de sorte qu'un volume important peut être obtenu lorsque le volet est ouvert.

Dans un mode de réalisation, ledit au moins un volet mobile est un volet coulissant. Il est alors facile de n'ouvrir que partiellement le volet pour accéder uniquement à une partie du compartiment inférieur tout en continuant à utiliser le reste du compartiment supérieur.

Dans un autre mode de réalisation, ledit au moins un volet mobile est un volet pivotant monté de manière à s'ouvrir dans le compartiment supérieur. Cette solution présente l'avantage d'être simple à réaliser.

De préférence, la console présente une ouverture latérale placée sur une de ses parois latérales afin d'accéder au compartiment inférieur. Il est alors possible d'accéder au contenu de ce dernier sans avoir à dégager l'accès du volet mobile depuis le compartiment supérieur.

De préférence, la console peut alors comporter un bac de rangement apte à être logé dans le compartiment inférieur, et à coulisser dans et hors de ce dernier par l'ouverture latérale. Un accès simple et rapide à l'ensemble du contenu de ce compartiment est ainsi possible.

De préférence encore, le bac peut coulisser suivant une direction longitudinale de la console, l'ouverture latérale étant placée sur une paroi transversale de la console. Ce compartiment est alors par exemple accessible par les occupants des sièges arrière du véhicule, lorsque la console est une console centrale avant.

De préférence, au moins une des parois latérales longitudinales de la console comporte un conduit de circulation d'air s'étendant longitudinalement sur toute la longueur de la console au niveau du compartiment supérieur. Un tel conduit permet l'aération et/ou le chauffage de la partie arrière d'un véhicule, dans le cas d'une console centrale avant.

Plus particulièrement, lorsque le volet mobile est un volet pivotant, le(s) conduit(s) de circulation d'air est (sont) disposé(s) au-dessus du volet mobile en position ouverte, afin de ne pas géner l'ouverture du volet.

De préférence, le(s) conduit(s) de circulation d'air est (sont) formé(s) dans la paroi longitudinale, sa (leur) dimension dans la direction transversale de la console étant répartie de part et d'autre du plan formé par la paroi longitudinale.

L'invention est maintenant décrite en référence aux dessins annexés, non limitatifs, dans lesquels :
- la figure 1 est une représentation en perspective schématique d'une console selon l'invention ;
- la figure 2 est une vue en coupe transversale schématique de la console de la figure 1 ;
- La figure 3 est une vue de côté partiellement en coupe de l'intérieur de la console représentée figure 1, les volets de séparation des deux compartiments internes étant fermés ;
- La figure 4 est une vue similaire à celle de la figure 3, les volets de séparation des deux compartiments internes étant ouverts.

Un mode de réalisation de la console est décrit en référence aux figures.

La console 1, de forme générale sensiblement parallélépipédique, est formée d'une paroi de fond 2, solidaire de deux parois latérales longitudinales 3 et de deux parois latérales transversales 4. Les parois latérales supportent une paroi supérieure 5.

Ces parois définissent un volume interne ou cavité 6 pouvant servir de rangement.

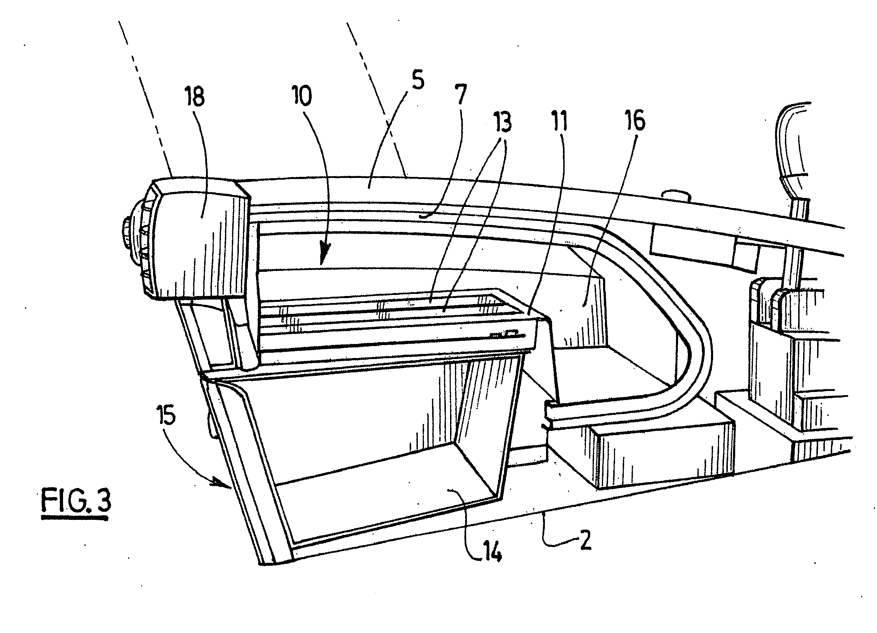

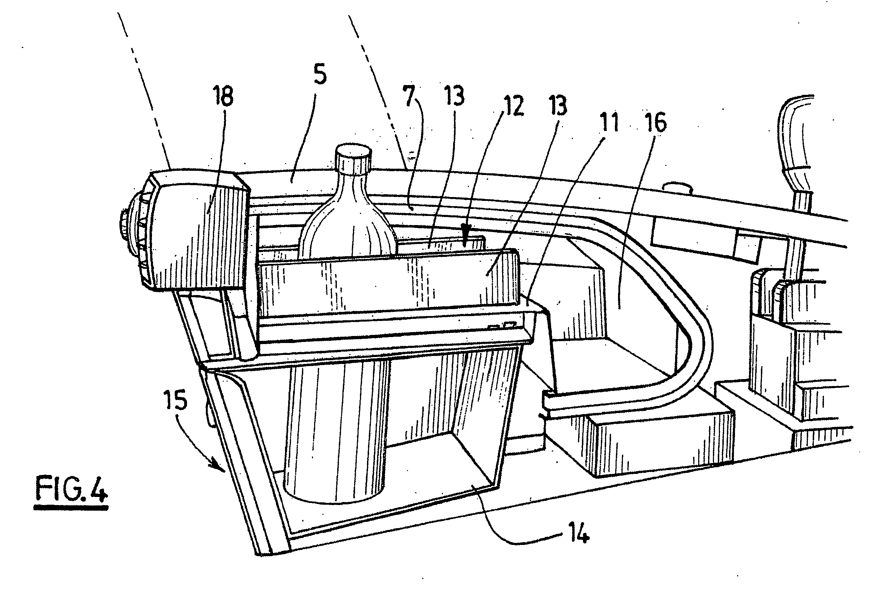

La paroi supérieure 5 est pourvue d'une ouverture supérieure 7 obturée par un volet ouvrant 8. Il s'agit par exemple d'un volet coulissant. Sur les figures 3 et 4, une des glissières de coulissement du volet 8 est représentée, elle délimite l'un des bords de l'ouverture 7.

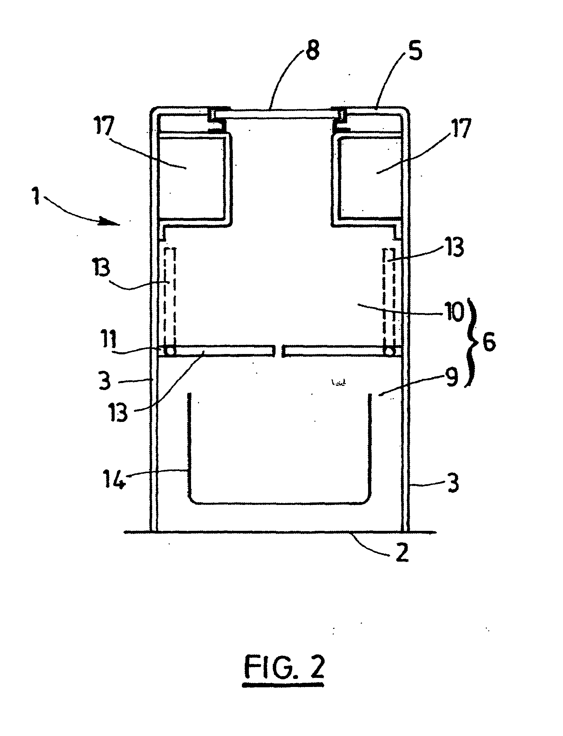

La cavité 6 est divisée en deux compartiments inférieur 9 et supérieur 10 disposés l'un au dessus de l'autre et séparés par une cloison 11 sensiblement horizontale. Cette cloison 11 présente une ouverture 12 qui s'étend sur toute la surface du compartiment inférieur (figures 3 et 4). L'ouverture 12 est obturée par deux volets ouvrants 13 identiques et articulés de manière à pouvoir pivoter 'autour d'axes sensiblement parallèles à la direction longitudinale de la console. Ils sont montés sur la cloison à proximité des parois longitudinales 3. Ces volets sont par ailleurs montés de manière à s'ouvrir en direction du compartiment supérieur 10 (pointillés de la figure 2), de manière à pouvoir servir, en position fermée, de fond pour le compartiment supérieur 10, qui peut alors être entièrement utilisé (figure 3). A cet effet, les volets doivent être suffisamment résistants pour pouvoir supporter une charge dans leur position fermée.

La console comporte également un bac de rangement 14 apte à être logé dans le compartiment inférieur 9. Le bac peut par exemple être d'un volume suffisant pour pouvoir contenir des boîtiers de disques compacts. Le bac présente une ouverture dirigée vers le haut correspondant sensiblement à l'ouverture 12 de la cloison de séparation. Il est par ailleurs conçu de manière à pouvoir coulisser hors et dans le compartiment inférieur 9, à la manière d'un tiroir. A cet effet, l'une des parois transversales 4 de la console est pourvue d'une ouverture 15 pour sortir ou rentrer le bac 14. Le bac peut être pourvu de roulettes ou surfaces de glissement (par exemple des nervures longitudinales) pour faciliter son déplacement.

Pour une console centrale d'un véhicule, placée entre les sièges avant du véhicule, cette ouverture 15 est dirigée vers les sièges arrière, de manière à être accessible aux passagers arrière.

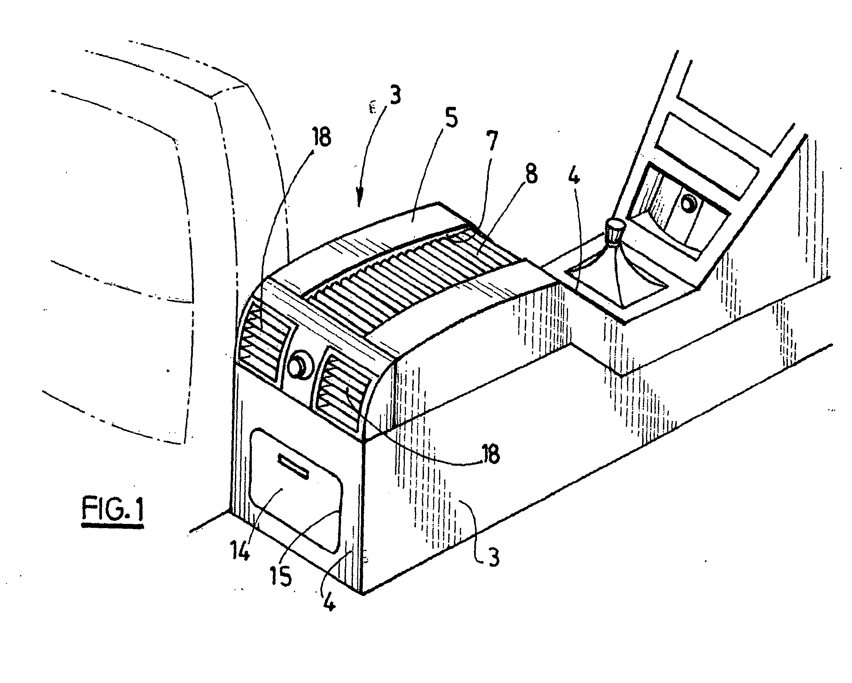

Le bac de rangement 14 est ainsi accessible par l'ouverture 15 quelle que soit la position, ouverte ou fermée, des volets 13. De préférence, l'une des parois latérales du bac forme un volet pour l'ouverture 15 lorsque le bac est dans le compartiment inférieur 9 (figure 1).

La figure 3 représente la console avec les volets 13 fermés. Des objets, accessibles par l'ouverture supérieure 7, peuvent alors être placés sur les volets 13 dans le compartiment supérieur 10. Les objets contenus dans le bac 14 ne sont accessibles que par l'ouverture 15 en faisant coulisser le bac hors de la console.

Le bac de rangement 14 est également accessible par l'ouverture supérieure 7 lorsque les volets 13 sont ouverts, tel que représenté sur les figures 2 (pointillés) et 4. Les deux compartiments sont alors en communication de sorte que des objets de volume important peuvent être placés dans la console. La figure 4 montre ainsi une bouteille d'eau de 1,5 1 placée dans la console et qui occupe toute la hauteur des deux compartiments.

Dans l'exemple, le compartiment supérieur se prolonge au-delà du compartiment inférieur suivant la direction longitudinale de la console, du côté opposé à l'ouverture 15, Un volume de rangement supplémentaire 16 est ainsi obtenu. Ce volume 16 est accessible par l'ouverture supérieure 7 et est utilisable quelle que soit la position ouverte ou fermée des volets 13.

Les parois longitudinales 3 de la console présentent dans leur partie supérieure des conduits d'air 17 (représentés uniquement sur la figure 2) qui traversent la console sur toute sa longueur et débouchent du côté de l'ouverture 15 sur des ouvertures pourvues de moyens de régulation 18. Du côté de la paroi transversale 4 opposée, c'est-à-dire vers l'avant du véhicule dans l'exemple, les conduits 17 sont reliés à un dispositif de ventilation / chauffage du véhicule non représenté. Les conduits 17 sont disposés suffisamment haut dans le compartiment supérieur 10 pour ne pas gêner une ouverture complète des volets 13 qui correspond aux volets sensiblement en appui contre les parois longitudinales (en pointillés sur la figure 2).

Dans un mode de réalisation non représenté, ces conduits peuvent être formés dans l'épaisseur de la paroi longitudinale, de sorte que leur dimension dans la direction transversale de la console soit répartie de part et d'autre du plan formé par chaque paroi longitudinale 3. Un bon compromis est alors obtenu entre la présence de conduit de distribution d'air, la diminution du volume intérieur du compartiment supérieur 10 et l'augmentation de l'encombrement externe de la console.

D'autres modes de réalisation de la console peuvent être envisages dans le cadre de l'invention, défini par les revendications, en modifiant par exemple une ou plusieurs des caractéristiques suivantes : la forme des compartiments ou des volets, les dimensions relatives des compartiments, le nombre de volets ou d'ouvertures de communication entre les deux compartiments, les dimensions de l'ouverture de communication, le système d'ouverture du ou des volets (ouverture coulissante ou pivotante, voire volet amovible), la position de fixation du volet (sur la cloison ou les parois latérales), etc.,.... On peut également prévoir des moyens de maintien des volets pivotants en position ouverte (par exemple par des aimants).

## Revendications

1. Console pour véhicule automobile (1) comportant une ouverture supérieure (7) permettant d'accéder, à une cavité interne de rangement (6), la cavité étant divisée en au moins deux compartiments intérieur (9) et supérieur (10) disposés l'un au-dessus de l'autre et séparés par une cloison (11) sensiblement horizontale la cloison (11) comportant au moins une ouverture obturée par au moins un volet (13) mobile entre une position fermée dans laquelle il est apte à supporter une charge et une position ouverte dans laquelle les deux compartiments (9, 10) sont en communication, **caractérisée en ce que** dans la position ouverte le volet reste à l'intérieur du compartiment supérieur.

2. Console selon la revendication 1, **caractérisée en ce que** l'ouverture dans la cloison s'étend sur sensiblement toute la surface du compartiment inférieur (9).

3. Console selon la revendication 1 ou 2, **caractérisée en ce que** ledit au moins un volet mobile (13) est un volet coulissant.

4. Console selon la revendication 1 ou 2, **caractérisée en ce que** ledit au moins un volet mobile (13) est un volet pivotant monté de manière à s'ouvrir dans le compartiment supérieur.

5. Console selon l'une des revendications 1 à 4, **caractérisée en ce qu'**une ouverture latérale (15) placée sur une paroi latérale (4) de la console permet d'accéder au compartiment inférieur (9).

6. Console selon la revendication 5, **caractérisée en ce qu'**elle comporte un bac de rangement (14) apte à être logé dans le compartiment inférieur (9), et à coulisser dans et hors de ce dernier par l'ouverture latérale (15).

7. Console selon la revendication 6, **caractérisée en ce que** le bac (14) peut coulisser suivant une direction longitudinale de la console, l'ouverture latérale (15) étant placée sur une paroi transversale (4) de la console.

8. Console selon l'une des revendications 1 à 7, **caractérisée en ce qu'**au moins une de ses parois latérales longitudinales (3) comporte un conduit de circulation d'air (17) s'étendant longitudinalement sur toute la longueur de la console au niveau du compartiment supérieur (10).

9. Console selon la revendication 8 lorsqu'elle dépend de la revendication 4, **caractérisée en ce que** le conduit de circulation d'air (17) est disposé au-dessus du volet mobile (13) en position ouverte.

10. Console selon la revendication 8 ou 9, **caractérisée en ce que** le conduit de circulation d'air (17) est formé dans la paroi longitudinale (3), son dimension dans la direction transversale de la console étant répartie de part et d'autre du plan formé par la paroi longitudinale (3).

## Claims

1. Motor vehicle console (1) comprising a top opening (7) allowing access to an internal storage cavity (6), the cavity being divided into at least two compartments, a bottom compartment (9) and a top compartment (10), placed one above the other and separated by a substantially horizontal partition (11), the partition (11) comprising at least one opening closed off by at least one flap (13) that can be moved between a closed position in which it is capable of supporting a load and an open position in which the two compartments (9, 10) are in communication, **characterized in that**, in the open position, the flap remains inside the top compartment.

2. Console according to Claim 1, **characterized in that** the opening in the partition extends substantially over the whole surface of the bottom compartment (9).

3. Console according to Claim 1 or 2, **characterized in that** the said at least one movable flap (13) is a sliding flap.

4. Console according to Claim 1 or 2, **characterized in that** the said at least one movable flap (13) is a pivoting flap mounted so as to open into the top compartment.

5. Console according to one of Claims 1 to 4, **characterized in that** a side opening (15) placed on a side wall (4) of the console allows access to the bottom compartment (9).

6. Console according to Claim 5, **characterized in that** it comprises a storage bin (14) capable of being housed in the bottom compartment (9), and of sliding in and out of the latter via the side opening (15).

7. Console according to Claim 6, **characterized in that** the bin (14) can slide in a longitudinal direction of the console, the side opening (15) being placed on a transverse wall (4) of the console.

8. Console according to one of Claims 1 to 7, **characterized in that** at least one of its longitudinal side walls (3) comprises an air circulation duct (17) extending longitudinally along the whole length of the console level with the top compartment (10).

9. Console according to Claim 8 when dependent on Claim 4, **characterized in that** the air circulation duct (17) is placed above the movable flap (13) in the open position.

10. Console according to Claim 8 or 9, **characterized in that** the air circulation duct (17) is formed in the longitudinal wall (3), its dimension in the transverse direction of the console being distributed on either side of the plane formed by the longitudinal wall (3).

## Patentansprüche

1. Konsole für ein Kraftfahrzeug (1), die eine obere Öffnung (7) aufweist, die den Zugang zu einem inneren Aufbewahrungshohlraum (6) ermöglicht, wobei der Hohlraum in mindestens zwei Abteile, ein unteres (9) und ein oberes (10), aufteilt ist, die übereinander angeordnet und durch eine im Wesentlichen waagrechte Trennwand (11) getrennt sind, wobei die Trennwand (11) mindestens eine Öffnung aufweist, die von mindestens einer Klappe (13) verschlossen wird, die zwischen einer geschlossenen Stellung, in der sie eine Last tragen kann, und einer offenen Stellung beweglich ist, in der die zwei Abteile (9, 10) miteinander in Verbindung stehen, **dadurch gekennzeichnet, dass** in der offenen Stellung die Klappe im Inneren des oberen Abteils bleibt.

2. Konsole nach Anspruch 1, **dadurch gekennzeichnet, dass** die Öffnung in der Trennwand sich im Wesentlichen über die ganze Fläche des unteren Abteils (9} erstreckt.

3. Konsole nach Anspruch 1 oder 2, **dadurch gekennzeichnet, dass** die mindestens eine bewegliche Klappe (13) eine gleitende Klappe ist.

4. Konsole nach Anspruch 1 oder 2, **dadurch gekennzeichnet, dass** die mindestens eine bewegliche Klappe (13) eine schwenkbare Klappe ist, die so montiert ist, dass sie sich in das obere Abteil öffnet.

5. Konsole nach einem der Ansprüche 1 bis 4, **dadurch gekennzeichnet, dass** eine seitliche Öffnung (15), die an einer Seitenwand (4) der Konsole angeordnet ist, den Zugang zum unteren Abteil (9) ermöglicht.

6. Konsole nach Anspruch 5, **dadurch gekennzeichnet, dass** sie einen Aufbewahrungsbehälter (14) aufweist, der im unteren Abteil (9) angeordnet ist und in das und aus diesem letzteren durch die seitliche Öffnung (15) gleiten kann.

7. Konsole nach Anspruch 6, **dadurch gekennzeichnet, dass** der Behälter (14) in einer Längsrichtung der Konsole gleiten kann, wobei die seitliche Öffnung (15) sich auf einer Querwand (4) der Konsole befindet.

8. Konsole nach einem der Ansprüche 1 bis 7, **dadurch gekennzeichnet, dass** mindestens eine ihrer Längsseitenwände (3) einen Luftzirkulationskanal (17) aufweist, der sich in Längsrichtung über die ganze Länge der Konsole in Höhe des oberen Abteils (10) erstreckt.

9. Konsole nach Anspruch 8, wenn er von Anspruch 4 abhängt, **dadurch gekennzeichnet, dass** der Luftzirkulationskanal (17) über der beweglichen Klappe (13) in der offenen Stellung angeordnet ist.

10. Konsole nach Anspruch 8 oder 9, **dadurch gekennzeichnet, dass** der Luftzirkulationskanal (17) in der Längswand (3) ausgebildet ist, wobei seine Abmessung in Querrichtung der Konsole zu beiden Seiten der von der Längswand (3) gebildeten Ebene verteilt ist.
